# FASCICULE DE BREVET EUROPEEN

(11) **EP 2 047 325 B1**
(45) Date de publication et mention de la délivrance du brevet: **26.04.2017**
(21) Numéro de dépôt: 07823594.2
(22) Date de dépôt: 17.07.2007
(51) Int. Cl.: G02F 1/15, G02F 1/153

(54) **DISPOSITIF ELECTROCHIMIQUE / ELECTROCOMMANDABLE DU TYPE VITRAGE ET A PROPRIETES OPTIQUES ET/OU ENERGETIQUES VARIABLES**
ELEKTROCHEMISCH/ELEKTRISCH STEUERBARE GLASVORRICHTUNG MIT VERÄNDERLICHEN OPTISCHEN UND/ODER ENERGETISCHEN EIGENSCHAFTEN
GLASS TYPE ELECTROCHEMICAL/ ELECTRICALLY CONTROLLABLE DEVICE WITH VARIABLE OPTICAL AND/OR ENERGETIC CHARACTERISTIC

(30) Priorité: 21.07.2006 FR 0653068
(43) Date de publication de la demande: 15.04.2009
(73) Titulaire: Sage Electrochromics, Inc., Faribault, MN 55021 (US)
(72) Inventeur: VALENTIN, Emmanuel, 94420 Le Plessis Trevise (FR); FANTON, Xavier, 93600 Aulnay Sous Bois (FR); DUBRENAT, SAMUEL, 75017 Paris (FR); GIRON, Jean-Christophe, 4700 Eupen (BE)
(74) Mandataire: Saint-Gobain Recherche
(86) Numéro de dépôt international: PCT/FR2007/051675
(87) Numéro de publication internationale: WO 2008/009850

(56) Documents cités:
- EP-A2- 0 470 867
- EP-B1- 0 519 921
- WO-A1-00/57243
- FR-A- 2 781 084
- FR-A1- 2 873 460
- JP-A- 57 027 240
- JP-A- 61 277 927
- US-A- 4 958 917
- POSADOWSKI ET AL: "Properties of silicon nitride thin films obtained by reactive sputtering", THIN SOLID FILMS, ELSEVIER-SEQUOIA S.A. LAUSANNE, CH, vol. 69, no. 2, 16 June 1980 (1980-06-16), pages 149-155, XP025719334, ISSN: 0040-6090, DOI: 10.1016/0040-6090(80)90030-9 [retrieved on 1980-06-16]

## Description

La présente invention a pour objet un dispositif électrochimique, et/ou électrocommandable du type vitrage et à propriétés optiques et/ou énergétiques variables.

Il y a en effet actuellement une demande accrue pour des vitrages dits " intelligents " aptes à s'adapter aux besoins des utilisateurs.

En ce qui concerne les vitrages " intelligents ", il peut s'agir du contrôle de l'apport solaire à travers des vitrages montés en extérieur dans des bâtiments ou des véhicules du type automobile, train ou avion (hublot par exemple). Le but est de pouvoir limiter un échauffement excessif à l'intérieur des habitacles/locaux, mais uniquement en cas de fort ensoleillement.

Il peut aussi s'agir du contrôle du degré de vision à travers des vitrages, notamment afin de les obscurcir, de les rendre diffusant voire d'empêcher toute vision quand cela est souhaitable. Cela peut concerner les vitrages montés en cloisons intérieures dans les locaux, les trains, les avions ou montés en vitres latérales d'automobile. Cela concerne aussi les miroirs utilisés comme rétroviseurs, pour éviter ponctuellement au conducteur d'être ébloui, ou les panneaux de signalisation, pour que des messages apparaissent quand cela est nécessaire, ou par intermittence pour mieux attirer l'attention. Des vitrages que l'on peut rendre à volonté diffusants peuvent être utilisés quand on le souhaite comme écrans de projection.

En variante, il peut s'agir de la génération de lumière par le vitrage afin de contrôler le niveau de luminosité ou la couleur générée.

Il existe différents systèmes électrocommandables permettant ce genre de modifications d'aspect/de propriétés thermiques.

Pour moduler la transmission lumineuse ou l'absorption lumineuse des vitrages, il y a les systèmes dits viologènes, comme ceux décrits dans les brevets US-5 239 406 et EP-612 826.

Pour moduler la transmission lumineuse et/ou la transmission thermique des vitrages, il y a aussi les systèmes dits électrochromes. Ceux-ci, de manière connue, comportent généralement deux couches de matériau électrochrome séparées par une couche d'électrolyte et encadrées par deux couches électroconductrices, ces dernières étant associées à des amenées de courant connectées à une alimentation électrique. Un exemple de système électrochrome est connu de la demande de brevet EP 0 519 921.

. Chacune des couches de matériau électrochrome peut insérer réversiblement des cations et des électrons, la modification de leur degré d'oxydation suite à ces insertions/désinsertions conduisant à une modification dans ses propriétés optiques et/ou thermiques. On peut notamment moduler leur absorption et/ou leur réflexion dans les longueurs d'onde du visible et/ou de l'infra-rouge.
Il est d'usage de ranger les systèmes électrochromes en trois catégories :
- celle où l'électrolyte est sous forme d'un polymère ou d'un gel ; par exemple un polymère à conduction protonique comme ceux décrits dans les brevets EP-253 713 ou EP-670 346, ou un polymère à conduction d'ions lithium comme ceux décrits dans les brevets EP-382 623, EP-518 754 et EP-532 408 ; les autres couches du système étant généralement de nature minérale,
- celle où l'électrolyte est une couche minérale. On désigne souvent cette catégorie sous le terme de système " tout solide ", on pourra en trouver des exemples dans les brevets EP-867 752, EP-831 360, les brevets WO00-57243 et WO00-71777,
- celle où l'ensemble des couches est à base de polymères, catégorie que l'on désigne souvent sous le terme de système " tout polymère ".

La présente invention s'intéresse aux électrochromes « tout solide »

Tous ces systèmes ont en commun la nécessité d'être équipés en amenées de courant venant alimenter des couches électroconductrices de part et d'autre de la couche ou des différentes couches active(s) du système.

Ces amenées de courant permettent l'application d'une tension et le passage d'un courant au travers de l'empilement, le passage du courant devant assurer la commutation d'un état coloré à un état décoloré et réciproquement.

On comprend que le passage d'un état à un autre se traduit soit par un obscurcissement, soit par un éclaircissement du vitrage ainsi piloté. La tendance actuelle est d'avoir des systèmes, sous l'effet d'une alimentation, qui produisent des effets rapides, homogènes, et dont le contraste entre les 2 états (décoloré/coloré) est le plus élevé possible, de manière à atteindre un système quasiment opaque à l'état coloré, le contraste étant défini comme le rapport entre la valeur de la transmission lumineuse (TL) à l'état décoloré à la valeur de la transmission lumineuse à l'état coloré.

Pour ce faire, plusieurs solutions de l'art antérieur sont connues : augmenter la quantité de charge ou le niveau de tension aux bornes des amenées de courant, l'inconvénient majeur de cette solution réside dans le fait que généralement elle conduit à une moindre robustesse du système, utiliser des couches optiquement plus actives élargissant les gammes de transmission lumineuse atteignables. Le développement de telles couches peut demander un travail de recherche considérable avec une modification ou un remplacement des matériaux existants,
juxtaposer au moins 2 systèmes complets montés en configuration de vitrage multiple (On pourra se reporter au brevet US-5 076 673). Cette solution minimise les chances qu'un défaut présent sur l'un des systèmes se trouve en regard d'un défaut présent sur l'autre système. L'inconvénient majeur de cette solution réside dans le fait qu'il faut une alimentation pour chacun des systèmes ce qui grève le coût de revient ; de plus, la juxtaposition des systèmes se traduit par un alourdissement de la structure globale, compte tenu qu'au moins 4 substrats sont nécessaires au montage. Ce montage en vitrage multiple, notamment en double vitrage, augmente nécessairement le nombre d'interfaces optiques et donc va conduire à un abaissement de la transmission lumineuse à l'état décoloré. Ce montage en double vitrage de type « bâtiment » n'est pas transposable dans le domaine de l'automobile. On peut noter que le montage en feuilleté, courant dans le domaine de l'automobile, n'est possible qu'avec des substrats sensiblement plans et avec un nombre limité de substrats (2 ou 3). Il est quasiment impossible avec des substrats fortement bombés, surtout quand leur nombre est supérieur à 2, voire 3 et conduit généralement à des risques de distorsion optique.

La présente invention vise donc à pallier les solutions de l'art antérieur en proposant un système pilotable par une seule alimentation et dont les performances de fonctionnement sont au moins identiques à celles de 2 systèmes juxtaposés.

L'invention a pour objet un vitrage électrochrome tel que défini par la revendication 1, comprenant un dispositif électrochimique/ électrocommandable, à propriétés optiques et/ou énergétiques variables, comportant un premier empilement de couches électroactives et séparés par un moyen isolant électriquement choisi parmi la famille des matières organiques, ledit moyen isolant étant un intercalaire de feuilletage.

Un dispositif selon le préamble de la revendication 1 est divulgué dans le document EP 0 519 921 B1.

Grâce à la présence d'un moyen isolant entre les deux empilements actifs, il est possible d'obtenir, à moindre coût, un système possédant un degré d'obscurcissement élevé.

Dans des modes de réalisation préférés de l'invention, on peut éventuellement avoir recours en outre à l'une et/ou à l'autre des dispositions suivantes :
Dans ce dernier mode de réalisation particulier, l'intercalaire de feuilletage assure à la fois l'assemblage de l'ensemble et les moyens de connexion électrique avec certaines des couches électroconductrices des empilements actifs,
   - les premier et second empilements sont alimentés électriquement à partir d'une même alimentation,
   - les premier et second empilements sont alimentés électriquement en série,
   - les premier et second empilements sont alimentés électriquement en parallèle,
   - le moyen isolant électriquement est un intercalaire de feuilletage, chacune des faces de l'intercalaire de feuilletage étant associée à une couche électroconductrice associée respectivement au premier et au second empilement,
   - le premier empilement et le second empilement sont des empilements électrochromes « tout solide » de structure TC1/EC1/EL/EC2/TC2,
   - la couche à fonction électrolyte EL comporte au moins une couche à base d'un matériau choisi parmi les oxydes, de tantale, de tungstène, de molybdène, d'antimoine, de niobium, de chrome, de cobalt, de titane, d'étain, de nickel, de zinc éventuellement allié avec de l'aluminium, de zirconium, d'aluminium, de silicium, éventuellement allié avec de l'aluminium, du nitrure de silicium éventuellement allié avec de l'aluminium ou du bore, nitrure de bore, nitrure d'aluminium, l'oxyde de vanadium éventuellement allié avec de l'aluminium, oxyde d'étain et de zinc, au moins un de ces oxydes étant éventuellement hydrogéné, ou nitruré,
   - chaque couche électroactive EC1 ou EC2 comporte au moins un des composés suivants : oxydes de tungstène W, de niobium Nb, d'étain Sn, de bismuth Bi, de vanadium V, de nickel Ni, d'iridium lr, d'antimoine Sb, de tantale Ta, seul ou en mélange, et comprenant éventuellement un métal additionnel tel que le titane, le rhénium ou le cobalt,
   - la couche électroconductrice TC1 ou TC2 est de type métallique ou du type TCO (Transparent Conductive Oxide) en In₂O₃:Sn (ITO), SnO₂:F, ZnO:Al, ou être un multi-couche du type TCO/métal/TCO, ce métal étant choisi notamment parmi l'argent, l'or, le platine, le cuivre, ou un multi-couche de type NiCr/métal/NiCr, le métal étant choisi également notamment parmi l'argent, l'or, le platine, le cuivre,
   - chacune des faces de l'intercalaire de feuilletage est associée à au moins une couche électroconductrice, comportant une bande conductrice, et/ou des fils conducteurs,
   - les valeurs contrastes obtenues sont comprises entre 9 à 10000 et préférentiellement entre 15 à 4000.

Selon un autre aspect de l'invention, elle vise un vitrage électrochrome, qui se caractérise en ce qu'il comporte le dispositif électrochimique selon la revendication 1, présentant notamment une transmission et/ou réflexion lumineuse et/ou énergétique variable, avec le substrat ou au moins une partie des substrats transparent(s) ou partiellement transparent(s), en matériau plastique, de préférence monté en vitrage multiple et/ou feuilleté, ou en double vitrage.

Selon encore un autre aspect de l'invention, elle vise un procédé de fabrication du dispositif électrochimique selon la revendication 1, dans lequel on dépose au moins l'une des couches du dispositif électrochimique par une technique utilisant le vide, du type pulvérisation cathodique, éventuellement assistée par champ magnétique, par évaporation thermique ou assistée par un flux d'électrons, par ablation laser, par CVD, éventuellement assistée par plasma ou par micro-ondes, ou par une technique à pression atmosphérique, notamment par dépôt de couches par synthèse sol-gel, notamment de type trempé, spray-coating ou enduction laminaire.

Enfin, selon encore un autre aspect de l'invention, elle vise l'utilisation du vitrage mentionné précdemment en tant que vitrage pour le bâtiment, vitrage pour l'automobile, vitrage de véhicules industriels ou de transport collectif, ferroviaire, maritime, aérien, en particulier hublot, rétroviseurs, miroirs, Display et affichage, obturateur pour dispositifs d'acquisition d'images.

On entend au sens de l'invention par couche électroconductrice " inférieure ", la couche électroconductrice qui se trouve la plus proche du substrat porteur pris en référence, sur laquelle une partie au moins des couches électroactives formant l'empilement actif (par exemple l'ensemble des couches actives dans un système électrochrome " tout solide ") est déposée. La couche électroconductrice " supérieure " est celle déposée de l'autre côté.

Dans les gammes d'épaisseurs mentionnées ci-après, la couche électroconductrice demeure transparente, c'est-à-dire qu'elle présente une faible absorption lumineuse dans le visible. Il n'est cependant pas exclu d'avoir des couches nettement plus épaisses (notamment dans le cas où le système électroactif du type électrochrome fonctionne en réflexion plutôt qu'en transmission), ou des couches plus fines (notamment quand elles sont associées dans la couche électroconductrice à un autre type de couche conductrice, métallique par exemple). Comme mentionné plus haut, l'invention peut s'appliquer à différents types de systèmes électrochimiques ou électrocommandables. L'invention telle que définie dans la revendication 1 concerne plus particulièrement des systèmes électrochromes, notamment les " tout solide ".

Les systèmes, ou vitrages, électrochromes auxquels peut s'appliquer l'invention, sont décrits dans les brevets précités. Ils peuvent comporter au moins deux substrats porteurs entre lesquels sont compris des empilements formant des systèmes actifs et comprenant chacun au moins successivement une première couche électroconductrice reliée à une amenée de courant, au moins une couche électrochimiquement active susceptible d'insérer réversiblement des ions tels que H⁺, Li⁺, OH⁻ du type matériau électrochrome anodique ou respectivement cathodique, une couche d'électrolyte, au moins une seconde couche électrochimiquement active susceptible d'insérer réversiblement des ions tels que H⁺, Li⁺, OH⁻ du type matériau électrochrome cathodique ou respectivement anodique, et une seconde couche électroconductrice reliée à une amenée de courant, (le terme de " couche " est à comprendre comme une couche unique ou une superposition de plusieurs couches, continues ou discontinues.

L'invention concerne également l'incorporation des dispositifs électrochimiques décrits dans le préambule de la présente demande dans des vitrages, fonctionnant en réflexion (miroir) ou en transmission. Le terme " vitrage " est à comprendre au sens large et englobe tout matériau essentiellement transparent, en verre et/ou en matériau polymère (comme du polycarbonate PC ou du polymétacrylate de méthyle PMMA). Les substrats porteurs et/ou contre-substrats, c'est-à-dire les substrats encadrant le système actif, peuvent être rigides, flexibles ou semi-flexibles.

Ce vitrage peut être utilisé en tant que vitrage pour le bâtiment, vitrage pour l'automobile, vitrage de véhicules industriels ou de transport collectif, ferroviaire, maritime, aérien, en particulier hublot, rétroviseurs, miroirs. Ce vitrage présentant notamment une transmission et/ou réflexion lumineuse et/ou énergétique variable, avec le substrat ou au moins une partie des substrats transparent(s) ou partiellement transparent(s), en matériau plastique, ou en verre, est de préférence monté en vitrage multiple et/ou feuilleté, ou en double vitrage.

L'invention concerne également les diverses applications que l'on peut trouver à ces dispositifs, vitrages ou miroirs : il peut s'agir de faire des vitrages pour bâtiment, notamment des vitrages extérieurs, des cloisons internes ou des portes vitrées). Il peut aussi s'agir de fenêtres, toits ou cloisons internes de moyens de transport comme des trains, avions (hublot par exemple), voitures, bateaux. Il peut aussi s'agir d'écrans de visualisation ou d'affichage, comme des écrans de projection, des écrans de télévision ou d'ordinateur, des écrans tactiles communément appelés « display ». On peut aussi les utiliser pour faire des lunettes ou des objectifs d'appareil photo, ou encore pour protéger des panneaux solaires.

L'invention sera maintenant décrite plus en détails à l'aide d'exemples non limitatifs et de figures :
- La figure 1 : une vue schématique d'une cellule électrochrome conforme à l'invention,
- la figure 2 illustre est une vue schématique en coupe de la figure 1.

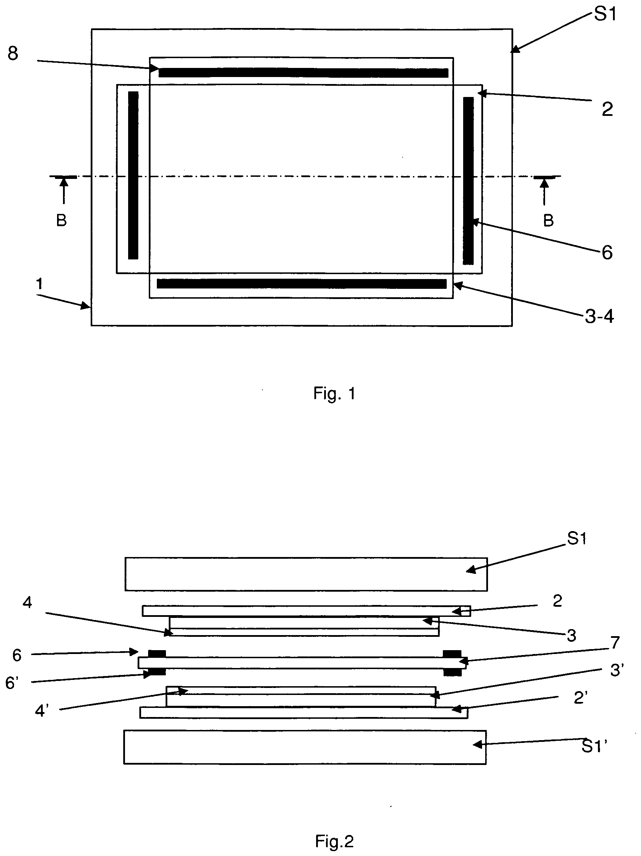

La figure 1 est volontairement très schématique et n'est pas nécessairement à l'échelle pour en faciliter la lecture : elle représente en coupe un dispositif électrochrome " tout solide " selon les enseignements de l'invention comprenant successivement :
- un substrat de verre silico-sodo-calcique S1 clair de 2,1 mm d'épaisseur,
- une couche électroconductrice inférieure 2 comportant un empilement de couches du type ITO/ZnO :Al/Ag/ZnO :Al/ITO d'épaisseurs respectives 15 à 20 nm pour l'ITO/60 à 80 nm pour le ZnO :Al/3 à 15 nm pour l'argent/60 à 80 nm pour le ZnO :Al/15 à 20 nm pour l'ITO, ou est à base d'ITO (oxyde d'indium dopé à l'étain) de 500 nm, déposé à chaud
- un premier système électrochrome 3 dont la structure sera décrite ci après
- une couche électroconductrice supérieure 4 à base d'ITO ou de SnO₂ :F ou encore en variante une couche électroconductrice supérieure comportant d'autres éléments conducteurs: il peut s'agir plus particulièrement d'associer la couche électroconductrice à une couche plus conductrice qu'elle, et/ou à une pluralité de bandes ou de fils conducteurs. On se reportera pour plus de détails au brevet WO-00/57243 pour la mise en oeuvre de telles couches électroconductrices multi-composantes. Un mode de réalisation préféré de ce type de couche électroconductrice consiste à appliquer sur la couche d'ITO (éventuellement surmontée d'une ou plusieurs autres couches conductrices) un réseau de fils conducteurs incrustés à la surface d'une feuille 7 de polymère une feuille 7 faisant office d'intercalaire de feuilletage et permettant de relier la couche électroconductrice supérieure associée au premier empilement électrochrome et la couche électroconductrice supérieure associée au second empilement électrochrome à l'une des amenées de courant, par l'intermédiaire d'une pluralité de bandes conductrices, ou d'une bande conductrice, ou de fils conducteurs 6.une couche électroconductrice supérieure 4' de nature identique à la couche électroconductrice supérieure 4 reliée à des amenées de courant 9 et 9'
- un deuxième système électrochrome 3' dont la structure sera décrite ci-après
- une couche électroconductrice inférieure 2' de nature similaire à la couche électroconductrice inférieure 2 reliée à des amenées de courant 10 et 10'
- un substrat de verre silico-sodo-calcique SI' clair de 2,1 mm d'épaisseur,

Les premier et deuxième empilements électrochromes 3 et 3' comprennent :
- une première couche de matériau électrochrome anodique EC1 en oxyde d'iridium (hydraté) de 40 à 100 nm ou d'oxyde de nickel hydraté ou non de 40 à 400 nm, alliée ou non à d'autres métaux,
- une couche en oxyde de tungstène de 100 nm,
- une couche en oxyde de tantale hydraté ou d'oxyde de silice hydraté ou d'oxyde de zirconium hydraté de 100 nm, ces deux dernières couches formant une couche à fonction électrolyte EL
- une seconde couche de matériau électrochrome EC2 cathodique à base d'oxyde de tungstène WO₃ de 370 nm,

L'ensemble des couches a été déposé par pulvérisation cathodique assistée par champ magnétique. En variante, il pourrait être obtenu, par évaporation thermique ou assistée par un flux d'électrons, par ablation laser, par CVD, éventuellement assistée par plasma ou par micro-ondes, ou par une technique à pression atmosphérique, notamment par dépôt de couches par synthèse sol-gel, notamment de type trempé, spray-coating ou enduction laminaire.

L'empilement actif 3 et/ou 3' peut être incisé sur tout ou partie de sa périphérie au moyen de gorges réalisées par des moyens mécaniques ou par attaque par rayonnement laser, éventuellement pulsé, et ce afin de limiter les fuites électriques périphériques comme cela est décrit dans la demande française FR-2 781 084.

Par ailleurs, le vitrage représenté en figures 1, 2 incorpore (non représenté sur les figures) un premier joint périphérique en contact avec les faces 2 et 3 (2 et 3 étant d'une manière conventionnelle la numérotation des faces internes des substrats S1 et S1'), ce premier joint étant adapté pour réaliser une barrière aux agressions chimiques extérieures.

Un deuxième joint périphérique est en contact avec le chant de S1, le chant de SI' et des faces 1 et 4 (1 et 4 étant d'une manière conventionnelle la numérotation des faces externes des substrats S1 et S'1), de manière à réaliser : une barrière, un moyen de montage avec le moyen de transport, une étanchéité entre l'intérieur et l'extérieur, une fonction esthétique, un moyen d'incorporation d'éléments de renfort.

Le dispositif électrochrome décrit précédemment constitue l'exemple 1.

Le dispositif électrochrome de cet exemple 1 a été connecté à une source d'énergie de manière à permettre sa commutation entre un état coloré à un état décoloré et réciproquement. Les empilements électrochromes fonctionnent au moins sur une partie de leur surface optiquement en série. (En variante, l'alimentation électrique peut être réalisée en série ou en parallèle, sans toutefois affecter le fonctionnement optique en série du dispositif)

On donne ci-après pour diverses configurations d'empilement les valeurs de contraste atteint.

Si on alimente un dispositif électrochrome dont les systèmes actifs 3 et 3' sont respectivement
- une première couche de matériau électrochrome anodique EC1 en oxyde d'iridium (hydraté) de 60 à 90 nm préférentiellement 85 nm,
- une couche en oxyde de tungstène de 100 nm,
- une couche en oxyde de tantale hydraté, ces 2 dernières couches ayant une fonction électrolyte EL
- une seconde couche de matériau électrochrome EC2 cathodique à base d'oxyde de tungstène WO₃ de 350 à 390 nm préférentiellement 380 nm,

Les empilements 3 et 3' sont séparés électriquement et reliés mécaniquement par un intercalaire de feuilletage 7 possédant en surface des moyens de connexion électrique.

On obtient alors une commutation du vitrage entre un état décoloré possédant une Transmission Lumineuse (TL) de 38 % et un état coloré possédant une TL de 0.01%. Le contraste associé à ce vitrage est de 3800.

## Revendications

1. Vitrage électrochrome, comportant un dispositif électrochimique/ électrocommandable, à propriétés optiques et/ou énergétiques variables, comportant un premier substrat porteur (S1) muni d'une couche électroconductrice inférieure (2 ; TC1) sur laquelle est déposé un premier empilement électrochrome (3) comprenant des couches électroactives (EC1, EC2) séparées par une couche à fonction électrolyte (EL), un second substrat porteur (S1') muni d'une couche électroconductrice inférieure (2', TC1) sur laquelle est déposé un second empilement électrochrome (3') comprenant des couches électroactives séparées par une couche à fonction électrolyte (EL), les premier et second empilements électrochromes (3, 3') étant des empilements électrochromes « tout solide » fonctionnant, chacun sur au moins une portion de leur surface, optiquement en série et étant séparés par un moyen isolant électriquement choisi parmi la famille des matières organiques, le vitrage présentant notamment une transmission et/ou réflexion lumineuse et/ou énergétique variable, avec le substrat ou au moins une partie des substrats transparent(s) ou partiellement transparent(s), **caractérisé en ce que** le moyen isolant est un intercalaire de feuilletage (7), et chacune des faces de l'intercalaire de feuilletage est en contact avec une couche électroconductrice supérieure (4, 4' ; TC2) déposée respectivement sur le premier et sur le second empilement électrochrome (3, 3'), et **en ce que** l'électrolyte (EL) est une couche minérale.

2. Vitrage selon la revendication 1, **caractérisé en ce que** la couche à fonction électrolyte EL comporte au moins une couche à base d'un matériau choisi parmi les oxydes de tantale, de tungstène, de molybdène, d'antimoine, de niobium, de chrome, de cobalt, de titane, d'étain, de nickel, de zinc éventuellement allié avec de l'aluminium, de zirconium, d'aluminium, de silicium, éventuellement allié avec de l'aluminium, du nitrure de silicium éventuellement allié avec de l'aluminium ou du bore, nitrure de bore, nitrure d'aluminium, l'oxyde de vanadium éventuellement allié avec de l'aluminium, oxyde d'étain et de zinc, au moins un de ces oxydes étant éventuellement hydrogéné, ou nitruré.

3. Vitrage selon la revendication 1 ou 2, **caractérisé en ce que** chaque couche électroactive EC1 ou EC2 comporte au moins un des composés suivants : oxyde de tungstène W, de niobium Nb, d'étain Sn, de bismuth Bi, de vanadium V, de nickel Ni, d'iridium lr, d'antimoine Sb, de tantale Ta, seul ou en mélange, et comprenant éventuellement un métal additionnel tel que le titane, le rhénium, le cobalt.

4. Vitrage selon l'une quelconque des revendications 1 à 3, **caractérisé en ce que** les couches électroconductrices TC1 ou TC2 sont de type métallique ou du type TCO (Transparent Conductive Oxide) en In₂O₃:Sn (ITO), SnO₂:F, ZnO :Al, ou être un multi-couche du type TCO/métal/TCO, ce métal étant choisi notamment parmi l'argent, l'or, le platine, le cuivre, ou un multi-couche de type NiCr/métal/NiCr, le métal étant choisi également notamment parmi l'argent, l'or, le platine, le cuivre.

5. Vitrage selon l'une quelconque des revendications précédentes, **caractérisé en ce que** chacune des faces de l'intercalaire de feuilletage (7) est en contact avec au moins une couche électroconductrice (4, 4' ; TC2), comportant une bande conductrice, et/ou des fils conducteurs (6).

6. Vitrage selon l'une quelconque des revendications précédentes, **caractérisé en ce que** les valeurs contrastes obtenues sont comprises entre 9 à 10000 et préférentiellement entre 15 à 4000, le contraste étant défini comme le rapport entre la valeur de transmission lumineuse (TL) à l'état décoloré et la valeur de transmission lumineuse à l'état coloré.

7. Procédé de fabrication du vitrage électrochrome selon l'une des revendications 1 à 6, **caractérisé en ce qu'**on dépose au moins l'une des couches du dispositif électrochimique par une technique utilisant le vide, du type pulvérisation cathodique, éventuellement assistée par champ magnétique, par évaporation thermique ou assistée par un flux d'électrons, par ablation laser, par CVD, éventuellement assistée par plasma ou par micro-ondes, ou par une technique à pression atmosphérique, notamment par dépôt de couches par synthèse sol-gel, notamment de type trempé, spray-coating ou enduction laminaire.

8. Utilisation du vitrage selon la revendication 1 en tant que vitrage pour le bâtiment, vitrage pour l'automobile, vitrage de véhicules industriels ou de transport collectif, ferroviaire, maritime, aérien, en particulier hublot, rétroviseurs, miroirs, Display et affichage, obturateur pour dispositifs d'acquisition d'images.

## Patentansprüche

1. Elektrochrome Verglasung, die eine elektrochemische/elektrisch steuerbare Vorrichtung aufweist, mit variablen optischen und/oder energetischen Eigenschaften, die ein erstes Trägersubstrat (S1), das mit einer unteren elektrisch leitenden Schicht (2; TC1) versehen ist, auf die ein erster elektrochromer Stapel (3) aufgebracht wird, der elektroaktive Schichten (EC1, EC2) getrennt durch eine Schicht mit Elektrolytfunktion (EL) enthält, und ein zweites Trägersubstrat (S1') aufweist, das mit einer unteren elektrisch leitenden Schicht (2', TC1) versehen ist, auf die ein zweiter elektrochromer Stapel (3') aufgebracht wird, der elektroaktive Schichten getrennt durch eine Schicht mit Elektrolytfunktion (EL) enthält, wobei die ersten und zweiten elektrochromen Stapel (3, 3') elektrochrome "Ganz-Festkörper"-Stapel sind, die je über mindestens einen Abschnitt ihrer Fläche optisch in Reihe arbeiten und durch eine elektrisch isolierende Einrichtung getrennt sind, die aus der Familie der organischen Stoffe ausgewählt wird, wobei die Verglasung insbesondere eine variable Lichtübertragung- und/oder - reflexion und/oder Energieübertragung aufweist, wobei das Substrat oder zumindest ein Teil der Substrate transparent oder teilweise transparent ist, **dadurch gekennzeichnet, dass** die isolierende Einrichtung eine Verbundzwischenschicht (7) ist, und jede der Seiten der Verbundzwischenschicht mit einer oberen elektrisch leitenden Schicht (4, 4'; TC2) in Kontakt steht, die auf den ersten bzw. den zweiten elektrochromen Stapel (3, 3') aufgebracht wird, und dass der Elektrolyt (EL) eine Mineralschicht ist.

2. Verglasung nach Anspruch 1, **dadurch gekennzeichnet, dass** die Schicht mit Elektrolytfunktion EL mindestens eine Schicht auf der Basis eines Materials aufweist, das ausgewählt wird aus den Oxiden von Tantal, Wolfram, Molybdän, Antimon, Niobium, Chrom, Kobalt, Titan, Zinn, Nickel, Zink, ggf. legiert mit Aluminium, Zirkonium, Aluminium, Silicium, ggf. legiert mit Aluminium, Siliciumnitrid ggf. legiert mit Aluminium oder Bor, Bornitrid, Aluminiumnitrid, Vanadiumoxid ggf. legiert mit Aluminium, Zinn- und Zinkoxid, wobei mindestens eines dieser Oxide ggf. hydrogeniert oder nitriert ist.

3. Verglasung nach Anspruch 1 oder 2, **dadurch gekennzeichnet, dass** jede elektrisch aktive Schicht EC1 oder EC2 mindestens eine der folgenden Zusammensetzungen aufweist: Wolfram- W, Niobium-Nb, Zinn- Sn, Wismuth- Bi, Vanadium- V, Nickel-Ni, Iridium- Ir, Antimon- Sb, Tantaloxid Ta, alleine oder gemischt, und ggf. ein zusätzliches Metall wie Titan, Rhenium, Kobalt enthaltend.

4. Verglasung nach einem der Ansprüche 1 bis 3, **dadurch gekennzeichnet, dass** die elektrisch leitenden Schichten TC1 oder TC2 von metallischer Art oder von der Art TCO (Transparent Conductive Oxide) in In₂O₃:Sn (ITO), SnO₂:F, ZnO:Al, oder eine Mehrschicht von der Art TCO/Metall/TCO sind, wobei dieses Metall insbesondere ausgewählt wird unter Silber, Gold, Platin, Kupfer, oder eine Mehrschicht der Art NiCr/Metall/NiCr, wobei das Metall ebenfalls insbesondere unter Silber, Gold, Platin, Kupfer ausgewählt wird.

5. Verglasung nach einem der vorhergehenden Ansprüche, **dadurch gekennzeichnet, dass** jede der Seiten der Verbundzwischenschicht (7) mit mindestens einer elektrisch leitenden Schicht (4, 4'; TC2) in Kontakt ist, die einen leitenden Streifen und/oder leitende Drähte (6) aufweist.

6. Verglasung nach einem der vorhergehenden Ansprüche, **dadurch gekennzeichnet, dass** die erhaltenen Kontrastwerte zwischen 9 und 10000 und vorzugsweise zwischen 15 und 4000 liegen, wobei der Kontrast definiert wird als das Verhältnis zwischen dem Lichtübertragungswert (TL) im entfärbten Zustand und dem Lichtübertragungswert im gefärbten Zustand.

7. Verfahren zur Herstellung der elektrochromen Verglasung nach einem der Ansprüche 1 bis 6, **dadurch gekennzeichnet, dass** mindestens eine der Schichten der elektrochemischen Vorrichtung durch eine das Vakuum verwendende Technik aufgebracht wird, von der Art Kathodenzerstäubung, ggf. unterstützt durch Magnetfeld, durch thermische Zerstäubung oder unterstützt durch einen Elektronenstrom, durch Laserablation, durch CVD, ggf. unterstützt durch Plasma oder Mikrowellen, oder durch eine Technik mit Atmosphärendruck, insbesondere durch Aufbringen von Schichten durch Sol-Gel-Synthese, insbesondere von der Art Tauchbad, Spritzbeschichtung oder laminares Auftragen.

8. Verwendung der Verglasung nach Anspruch 1 als Verglasung im Bauhandwerk, Verglasung für Kraftfahrzeuge, Verglasung von Industrie- oder öffentlichen Transport-, Bahn-, Schifffahrt-, Luftfahrt-Fahrzeugen, insbesondere Bullaugen, Rückspiegel, Spiegel, Display und Anzeige, Verschluss für Bilderfassungsvorrichtungen.

## Claims

1. Electrochromic glazing comprising an electrochemical/electrically controllable device having variable optical and/or energetic properties, comprising a first carrier substrate (S1) provided with a lower electrically conductive layer (2; TC1) on which is deposited a first electrochromic stack (3) comprising electrically active layers (EC1, EC2) separated by an electrolyte function layer (EL), a second carrier substrate (S1') provided with an lower electrically conductive layer (2'; TC1) on which a second electrochromic stack (3') comprising electrically active layers separated by an electrolyte function layer (EL) is deposited, first and second electrochromics stacks (3, 3') being "all solid" electrochromics stacks functionning, each on at least a portion of their surface, optically in series and are separated by an electrically insulating means which is selected from the family of organic materials, the glazing having in particular a variable optical and/or energetic transmission and/or reflection, with the substrate or at least a part of the transparent or partially transparent substrate(s), **characterized in that** the insulating mean is a laminating insert (7), and each of the faces of the laminating insert being in contact with an upper electrically conductive layer (4, 4'; TC2) deposited respectively on the first and the second electrochromic stack (3, 3'), and, **in that** the electrolyte (EL) is an inorganic material layer.

2. Glazing as claimed in claim 1, **characterized in that** the layer EL with an electrolyte function comprises at least one layer based on a material selected from tantalum oxide, tungsten oxide, molybdenum oxide, antimony oxide, niobium oxide, chromium oxide, cobalt oxide, titanium oxide, tin oxide, nickel oxide, oxide of zinc optionally alloyed with aluminum, zirconium oxide, aluminum oxide, oxide of silicon optionally alloyed with aluminum, silicon nitride optionally alloyed with aluminum or boron, boron nitride, aluminum nitride, oxide of vanadium optionally alloyed with aluminum, oxide of tin and zinc, at least one of these oxides optionally being hydrogenated or nitrided.

3. The device as claimed in claims 1 or 2, **characterized in that** each electrically active layer EC1 or EC2 comprises at least one of the following compounds: oxide of tungsten W, niobium Nb, tin Sn, bismuth Bi, vanadium V, nickel Ni, iridium Ir, antimony Sb, tantalum Ta, individually or as a mixture, and optionally comprising an additional metal such as titanium, rhenium, cobalt.

4. The device as claimed in any one of the claims 1 to 3, **characterized in that** the electrically conductive layer TC1 or TC2 is of the metallic type or of the TCO (transparent conductive oxide) type made of In₂O3:Sn (ITO), SnO₂:F, ZnO:Al, or is a multiple layer of the TCO/metal/TCO type, this metal being selected in particular from silver, gold, platinum, copper, or a multiple layer of the NiCr/metal/NiCr type, the metal likewise being selected from silver, gold, platinum, copper.

5. The device as claimed in any one of the preceding claims, **characterized in that** each of the faces of the laminating insert (7) is in contact with at least one electrically conductive layer (4, 4'; TC2) comprising a conductive strip and/or conductive wires (6).

6. The device as claimed in any one of the preceding claims, **characterized in that** the contrast values obtained lie between 9 and 10 000, and preferably between 15 and 4000, the contrast being defined as the ratio between the optical transmission value (OT) in the uncolored state to the value of the optical transmission in the colored state.

7. A method for fabricating the electrochromic glazing as claimed in one of claims 1 to 6, **characterized in that** at least one of the layers of the electrochemical device is deposited by a technique implying a vacuum, such as cathodic sputtering optionally assisted with a magnetic field, by thermal evaporation or evaporation assisted with an electron beam, by laser ablation, by CVD optionally assisted with a plasma or with microwaves, or by an atmospheric pressure technique, in particular by depositing layers using sol-gel synthesis, in particular of the dip type, spray coating or roller coating.

8. The use of the glazing as claimed in claim 1 as glazing for buildings, glazing for automobiles, glazing for industrial or public transport railroad, maritime, aviation vehicles, in particular windows, wing mirrors, mirrors, display and monitor, shutter for image acquisition devices.
